# EUROPÄISCHE PATENTSCHRIFT

(11) **EP 2 412 981 B1**
(45) Veröffentlichungstag und Bekanntmachung des Hinweises auf die Patenterteilung: **04.05.2016**
(21) Anmeldenummer: 10007979.7
(22) Anmeldetag: 30.07.2010
(51) Int. Cl.: F04D 15/00, F04B 41/06, F04B 49/06, F04B 49/20, F24D 19/10

(54) **Pumpensystem**
Pump system
Système de pompe

(43) Veröffentlichungstag der Anmeldung: 01.02.2012
(73) Patentinhaber: Grundfos Management A/S, 8850 Bjerringbro (DK)
(72) Erfinder: Milthers, Jens Kjær, 9530 Støvring (DK); Jensen, Kim Hulegaard, 8840 Rødkærsbro (DK); Mortensen, Lars Sund, 9600 Aars (DK)
(74) Vertreter: Hemmer, Arnd

(56) Entgegenhaltungen:
- EP-A2- 1 209 364
- EP-A2- 1 898 097
- WO-A1-2007/134454
- WO-A2-2008/091970
- DE-U1- 29 719 056
- GB-A- 2 462 143

## Beschreibung

Die Erfindung betrifft ein Pumpensystem gemäß dem Oberbegriff des Anspruchs 1.

Insbesondere in Heizungsanlagen sind Pumpensysteme vorgesehen, welche zumindest ein Pumpenaggregat, eine Steuereinheit zur Steuerung des Pumpenaggregates und zumindest einen Sensor aufweisen, wobei die Steuereinheit das Pumpenaggregat in Abhängigkeit von Messwerten steuert, welche von dem Sensor erfasst werden. So kann ein Pumpensystem beispielsweise dazu dienen, ein Heizmedium bedarfsgerecht im Haus oder in einer Heizungsanlage zu fördern.

In komplexeren Heizungsanlagen werden komplexere Pumpensysteme benötigt, welche häufig auf Messwerte mehrerer Sensoren zugreifen müssen. Auch sind Sensoren und Pumpenaggregate nicht immer in unmittelbarer räumlicher Nähe angeordnet. Dies führt zu einem nicht unerheblichen Installationsaufwand, um die Sensoren mit der Steuereinheit und diese mit dem Pumpenaggregat zu verbinden.

WO2008/091970 A2 offenbart eine Steuereinrichtung für ein hydraulisches Heizsystem. Dieses System weist eine zentrale Steuereinheit auf, welche mit einer Vielzahl von Sensoren und Aktoren verbunden ist. Hieraus ergibt sich ein nicht unerheblicher Installationsaufwand.

GB 2 462 143 A offenbart ein Heizungssystem mit einer drahtlosen Steuerung der Heizkörperventile und Pumpen. Hierzu ist eine zentrale Steuereinheit vorgesehen, welche mit diesen Elementen kommuniziert. Zusätzlich können Sensoren wie Raumthermostate eingebunden sein. Bei einem solchen System muss an jeder Komponente eine ausreichende Signalstärke zur Kommunikation mit der zentralen Steuereinrichtung vorhanden sein, was je nach baulichen Gegebenheiten nicht immer problemlos möglich ist.

WO2007/134454 A1 offenbart eine Vorrichtung zum Steuern einer Relaispumpeinrichtung. Dieses weist eine zentrale Steuereinrichtung auf, welche Schnittstellen zur Verbindung mit verschiedenen Sensoren aufweist.

Es ist Aufgabe der Erfindung, ein verbessertes Pumpensystem, insbesondere ein Pumpensystem, welches zum Einsatz in einer Heizungsanlage vorgesehen ist, bereitzustellen, welches auf vereinfachte Weise zu installieren und in Betrieb zu nehmen ist.

Diese Aufgabe wird durch ein Pumpensystem mit den in Anspruch 1 angegebenen Merkmalen gelöst. Bevorzugte Ausführungsformen ergeben sich aus den Unteransprüchen, der nachfolgenden Beschreibung sowie den beigefügten Figuren.

Die erfindungsgemäße Idee liegt darin, einen erforderlichen Sensor bzw. erforderliche Sensoren nicht direkt mit der Steuereinheit zur Steuerung des Pumpenaggregates zu verbinden, sondern ein räumlich von der Steuereinheit getrenntes Datenerfassungsmodul vorzusehen. Dieses Datenerfassungsmodul dient dazu, die Ausgangssignale des Sensors oder mehrerer Sensoren zu erfassen. Sie Steuereinheit kann dann auf die von dem Datenerfassungsmodul erfassten und gesammelten Daten zugreifen. Dies ist insbesondere dann von Vorteil, wenn mehrere Sensoren vorgesehen sind, da deren Ausgangssignale so in dem Datenerfassungsmodul zentral gesammelt werden können und dann über eine einzige Schnittstelle zwischen dem Datenerfassungsmodul und der Steuereinheit zur Steuereinheit übertragen werden können bzw. der Steuereinheit bereitgestellt werden können. So muss nicht mehr jeder einzelne Sensor direkt mit der Steuereinheit kommunizieren.

Um dies zu ermöglichen, weist das Datenerfassungsmodul eine Ausgabeschnittstelle auf, an welcher es die erfassten Sensorsignale und/oder daraus abgeleitete Daten bereitstellt. Das bedeutet, das Datenerfassungsmodul kann an der Ausgabeschnittstelle entweder die erfassten Sensorsignale in nicht weiterverarbeiteter Form bereitstellen oder es kann in dem Datenerfassungsmodul bereits eine Signalverarbeitung der Ausgangssignale des Sensors erfolgen. So können an der Ausgabeschnittstelle aufbereitete Ausgangssignale bzw. aus den Ausgangssignalen der Sensoren abgeleitete Daten bereitgestellt werden. Es ist somit möglich, eine Datenverarbeitung vorzusehen, welche die Ausgangssignale z. B. an den Standard der Ausgabeschnittstelle anpasst oder möglicherweise auch so aufbereitet, dass nur relevante Daten an die Ausgabeschnittstelle weitergeleitet werden.

Die Steuereinheit weist ihrerseits eine Eingangsschnittstelle zur Übernahme von Signalen oder Daten von der Ausgabeschnittstelle auf. D. h. zwischen der Ausgabeschnittstelle des Datenerfassungsmoduls und der Eingangsschnittstelle der Steuereinheit findet eine Kommunikation statt, durch welche Daten oder Signale von den Sensoren, welche im Datenerfassungsmodul gesammelt werden und gegebenenfalls aufbereitet werden, an die Steuereinheit übertragen werden.

Die nicht direkte Anbindung der Sensoren an die Steuereinheit hat darüber hinaus den Vorteil, dass auf einfache Weise verschiedenste Sensoren mit der Steuereinheit kommunizieren können, ohne dass die Steuereinheit speziell zur Anbindung dieser Sensoren ausgebildet sein muss. Vielmehr kann das Datenerfassungsmodul die Ausgangssignale sammeln und an einer normierten Schnittstelle, auf welche die Steuereinheit zugreifen kann, für diese bereitstellen.

Vorzugsweise ist der zumindest eine Sensor mit dem Datenerfassungsmodul über ein Kabel verbunden. Dabei kann es sich vorzugsweise um eine elektrische Anschlussleitung, beispielsweise aber auch um einen Lichtleiter handeln. Darüber hinaus ist auch eine drahtlose Anbindung eines oder mehrerer Sensoren an das Datenerfassungsmodul, beispielsweise über Funkschnittstellen möglich. Insbesondere bei der Anbindung über Kabel ergibt sich jedoch der Vorteil, dass zum Anschließen der Sensoren diese nicht direkt mit der Steuereinheit verbunden werden müssen, sodass in der Steuereinheit keine einzelnen Anschlüsse für die Sensoren vorgesehen werden müssen. Dies vereinfacht den Aufbau der Steuereinheit und ermöglicht es darüber hinaus leichter, die Steuereinheit für das Pumpensystem in anderen Baugruppen oder Steuersystemen zu integrieren, in welchen sich Anschlüsse für Sensoren nur schwer unterbringen lassen.

Die Steuereinheit dient vorzugsweise beispielsweise zum Ein- und Ausschalten des Pumpenaggregates, kann jedoch im Falle einer geregelten Pumpe, beispielsweise auch die Drehzahlregelung bzw. Drehzahlsteuerung des Pumpenaggregates bewirken, um den Förderstrom bedarfsgerecht einstellen zu können. Dies kann auf Grundlage von Eingangssignalen, welche von dem zumindest einen Sensor geliefert werden und/oder gegebenenfalls auf Grundlage weiterer Parameter erfolgen.

Die Aufgabeschnittstelle des Datenerfassungsmoduls und die Eingangsschnittstelle der Steuereinheit können über eine Datenleitung, d. h. eine elektrische oder optische Datenleitung miteinander verbunden sein. Darüber hinaus wäre es auch denkbar, dass beide an ein Datennetz angeschlossen sind, welches gegebenenfalls noch eine Verbindung zu weiteren Komponenten herstellt. Besonders bevorzugt ist jedoch, dass die Ausgabeschnittstelle und die Eingangsschnittstelle als drahtlose Schnittstellen, insbesondere als Funkschnittstellen ausgebildet sind. Dies ermöglicht eine besonders einfache Anbindung des Datenerfassungsmoduls an die Steuereinheit, da keine Verbindung über Anschlussleitungen erforderlich ist. Dadurch vereinfacht sich zum einen die Montage. Zum anderen ist es auch möglich, das Datenerfassungsmodul und insbesondere die Steuereinheit problemlos in einem Gehäuse dicht zu kapseln, was in Pumpensystemen, welche häufig in feuchter Umgebung eingesetzt werden, von Vorteil ist. Die Funkschnittstellen können so ausgebildet sein, dass sie sich automatisch finden bzw. koppeln. Es ist möglich, in den Funkschnittstellen Kopplungsprozeduren vorzusehen, welche es ermöglichen, die Schnittstellen des Datenerfassungsmoduls und der Steuereinheit zur Kommunikation miteinander zu koppeln.

Besonders bevorzugt ist die Steuereinheit zumindest teilweise in das Pumpenaggregat integriert. D. h. die Steuereinheit bildet einen Teil des Pumpenaggregates. Sie ist zumindest teilweise in die Steuerelektronik des Pumpenaggregates integriert oder bildet die Steuerelektronik des Pumpenaggregates.

Besonders bevorzugt kann eine solche Steuereinheit auch noch weitere Pumpen oder Anlagenkomponenten, beispielsweise Ventile über entsprechende Kommunikationsschnittstellen steuern. Diese sind ebenfalls vorzugsweise als Funkschnittstellen ausgebildet. Insbesondere bei der Integration der Steuereinheit in das Pumpenaggregat ist die Verwendung des Datenerfassungsmoduls von großem Vorteil, da ein Anschließen eines oder mehrerer Sensoren an das Pumpenaggregat mittels elektrischer Anschlussleitungen so nicht erforderlich ist. Gerade in einem Pumpenaggregat ist häufig wenig Bauraum vorhanden, sodass zusätzliche Anschlussstecker oder Anschlussklemmen für die Anbindung von Sensoren nur schwer unterzubringen sind. Darüber hinaus ist es gerade in dem Pumpenaggregat bevorzugt, die Steuer- bzw. die Regelelektronik dicht zu kapseln, sodass deren Funktion durch Feuchtigkeit aus der Umgebung oder aus dem Förderraum des Pumpenaggregates nicht beeinträchtigt wird. Aus diesem Grunde ist es wünschenswert, an dem Pumpenaggregat möglichst wenig Anschlussklemmen oder Anschlussstecker und zu dichtende Gehäusedurchführungen vorzusehen. Ferner weisen Pumpenaggregate mechanische Komponenten auf, welche einem Verschleiß unterliegen oder der Wartung bedürfen. So ist es in dem Fall, dass ein Pumpenaggregat auszutauschen ist, von Vorteil, wenn die elektrische und steuerungstechnische Anbindung an weitere Anlagenkomponenten möglichst einfach ist, sodass ein solches Pumpenaggregat leicht zu montieren und gegebenenfalls auszutauschen ist. Durch Verringerung der Anschlüsse wird darüber hinaus die Gefahr von Fehlern bei Anschlüssen minimiert. Bei Verwendung des Datenerfassungsmoduls wird bei Austausch des Pumpenaggregates der Anschluss des zumindest einen Sensors nicht beeinträchtigt, da in die Kommunikationsverbindung zwischen Datenerfassungsmodul und Sensor zum Austausch des Pumpenaggregates überhaupt nicht eingegriffen werden muss. Lediglich die Kopplung oder Anbindung des Pumpenaggregates an das Datenerfassungsmodul muss wieder hergestellt werden, was vorzugsweise automatisch durch ein entsprechendes Kommunikationsprotokoll oder auch manuell erfolgen kann, um eine Kommunikationsverbindung, vorzugsweise über Funk, zwischen beiden Komponenten herzustellen.

Besonders bevorzugt sind, wie beschrieben, mehrere Sensoren mit dem Datenerfassungsmodul verbunden und das Datenerfassungsmodul stellt die Sensorsignale mehrerer oder aller Sensoren und/oder aus diesen abgeleitete Daten an der Ausgabeschnittstelle zur Übergabe an die Eingangsschnittstelle der Steuereinheit bereit. D. h. das Datenerfassungsmodul sammelt sämtliche Sensorsignale und stellt sie dann an einer Schnittstelle zur Übergabe bereit. Da die Steuereinheit dann nur noch über diese eine Schnittstelle, welche von der Eingangs- und der Ausgabeschnittstelle gebildet wird, kommunizieren muss, wird diese Kommunikation vereinfacht.

Weiter bevorzugt sind die Steuereinheit, deren Eingangsschnittstelle und die Ausgabeschnittstelle derart ausgestaltet, dass die Steuereinheit über die Eingangsschnittstelle von der Ausgabeschnittstelle lediglich aktuell von der Steuereinheit benötigte Daten oder Signale abruft. D. h. es werden nicht ständig sämtliche Signale oder Daten, welche vom Datenerfassungsmodul bereitgestellt bzw. aufbereitet werden, von der Ausgabeschnittstelle zur Eingangsschnittstelle übertragen. Vielmehr ruft die Steuereinheit über die Eingangsschnittstelle nur diejenigen Signale oder Daten ab, welche sie aktuell zur Ausführung eines Steuer- oder Regelprogramms benötigt. Hierdurch wird die Datenübertragung zwischen der Ausgabeschnittstelle und der Eingangsschnittstelle minimiert.

Das Pumpenaggregat ist vorzugsweise ein Umwälzpumpenaggregat, insbesondere ein Heizungsumwälzpumpenaggregat. Das Umwälzpumpenaggregat bzw. das Pumpensystem ist zur Integration in einer Heizungsanlage, beispielsweise zur Brauchwassererwärmung oder zur Gebäudeerwärmung vorgesehen. Das Umwälzpumpenaggregat weist vorzugsweise einen nasslaufenden elektrischen Antriebsmotor auf.

Gemäß einer weiteren besonderen Ausführungsform ist die Steuereinheit zur Steuerung mehrere Pumpenaggregate und/oder Ventile ausgebildet, wozu die Steuereinheit über eine entsprechende Schnittstelle, welche drahtlos oder drahtgebunden ausgebildet sein kann, mit diesen weiteren Komponenten kommunizieren kann. Dabei können die von der Steuereinheit gesteuerten Pumpenaggregate oder Ventile gegebenenfalls auch Zustandsgrößen oder Messwerte bzw. Sensorsignale für die Steuereinheit zu deren Steuerung bereitstellen. Dies kann über eine direkte Kommunikation, gegebenenfalls jedoch auch über eine Kommunikation über das Datenerfassungsmodul erfolgen. Auch ist es denkbar, dass die Kommunikation zwischen der Eingangsschnittstelle und der Ausgabeschnittstelle derart bidirektional ist, dass über diese Schnittstelle von der Steuereinheit weitere Komponenten, Sensoren, Ventile, weitere Pumpen etc., welche an das Datenerfassungsmodul angeschlossen sind, gesteuert werden können.

Wie oben beschrieben, ist die Steuereinheit vorzugsweise in das Pumpenaggregat integriert und weist eine Kommunikationsschnittstelle zur Kommunikation mit weiteren Pumpenaggregaten zu deren Steuerung bzw. Regelung auf. Dies kann eine unidirektionale oder bidirektionale Kommunikation sein. Die Kommunikationsschnittstelle ist besonders bevorzugt als Funkschnittstelle ausgebildet. Dies ermöglicht zum einen, einen einfachen Aufbau bzw. eine einfache Installation des Pumpensystems, da die Zahl der zu erstellenden Leitungsverbindungen minimiert wird. Zum anderen ist auch eine Kommunikation über größere Strecken problemlos möglich, beispielsweise zwischen Pumpenaggregaten, welche in verschiedenen Gebäudeteilen angeordnet sind.

Der zumindest eine Sensor ist vorzugsweise ein Temperatur-, Absolutdruck-, Differenzdruck- und/oder Durchflusssensor. Dies kann auch ein kombinierter Sensor sein, welcher sowohl die Temperatur als auch einen Druck bzw. Differenzdruck und/oder Durchfluss erfasst. Ein Durchflusssensor kann vorzugsweise als Vortex-Sensor ausgebildet sein, bei welchem das eigentliche Sensorelement ebenfalls ein Druck- bzw. Differenzdrucksensor ist, welcher die Verwirbelungen, welche durch eine Obstruktion in der Leitung hervorgerufen werden, erfasst.

Das Pumpensystem ist besonders bevorzugt Teil einer Brauchwassererwärmungseinrichtung. Eine solche Brauchwassererwärmungseinrichtung dient in einer Heizungsanlage dazu, warmes Brauchwasser zu erzeugen, welches beispielsweise an Waschbecken, Duschen, Badewannen etc. in einem Gebäude bereitgestellt wird. Eine solche Brauchwassererwärmungseinrichtung kann bevorzugt einen Wärmetauscher aufweisen, über welchen das Brauchwasser von einem Heizmedium erwärmt wird. Das Pumpenaggregat kann dann zur Förderung dieses Heizmediums dienen, um dem Wärmetauscher bedarfsgerecht Heizmedium zuzuführen, wenn Brauchwasser erwärmt werden muss. Hierzu kann die Steuereinheit beispielsweise auf ein Signal eines Temperaturoder Durchflusssensors zurückgreifen, welcher in der Brauchwasserleitung angeordnet ist. Ein solcher Sensor kann eine Brauchwasserströmung erfassen, welche signalisiert, dass warmes Brauchwasser gezapft wird. Daraufhin kann die Steuereinheit das Pumpenaggregat in Betrieb nehmen, um dem Wärmetauscher zum Erwärmen des Brauchwassers Heizmedium zuzuführen. Darüber hinaus ist es auch möglich, dass das Pumpenaggregat drehzahlgeregelt ist und die Steuereinheit die Drehzahl und damit den Förderstrom des Pumpenaggregates derart bedarfsgerecht einstellt, dass die Menge des dem Wärmetauscher zugeführten Heizmediums in Anhängigkeit von Messwerten varüerf wird, welche von einem oder mehreren Sensoren, welche mit dem Datenerfassungsmodul verbunden sind, erfasst werden. Dies können beispielsweise die Temperatur des Heizmediums, der Durchfluss im Brauchwasserkreislauf und/oder auch die Temperatur des kalten zu erwärmenden Brauchwassers sein.

Nachfolgend wird die Erfindung beispielhaft anhand einer Brauchwassererwärmungseinrichtung beschrieben, in welche ein Pumpensystem gemäß der Erfindung integriert ist. Die Beschreibung erfolgt anhand der beigefügten Figuren. In diesen zeigt:
- Fig. 1: eine Gesamtansicht einer an einem Wärmespeicher angeordneten Brauchwassererwärmungseinheit,
- Fig. 2: eine perspektivische Gesamtansicht der Brauchwassererwärmungseinheit gemäß Fig. 1,
- Fig. 3: eine perspektivische Ansicht des Wärmetauschers mit einer Anschlussarmatur,
- Fig. 4: eine Schnittansicht der Brauchwassererwärmungseinheit gemäß Fig. 2,
- Fig. 5,: 6 eine Brauchwassererwärmungseinheit gemäß Fig. 1, 2 und 4 ohne Brauchwasserzirkulationsmodul,
- Fig. 7: eine perspektivische Explosionsansicht der Brauchwassererwärmungseinheit mit Brauchwasserzirkulationsmodul,
- Fig. 8: eine perspektivische Ansicht der Brauchwassererwärmungseinheit mit montiertem Brauchwasserzirkulationsmodul,
- Fig. 9: schematisch die Strömungswege im Inneren des Wärmetauschers gemäß Fig. 3,
- Fig. 10: den Temperaturverlauf im Inneren des Wärmetauschers über den Strömungsweg,
- Fig. 11: ein hydraulisches Schaltbild einer Brauchwassererwärmungseinheit,
- Fig. 12: den Temperaturverlauf, welcher von einem Temperatursensor im Kaltwassereingang der Brauchwassererwärmungseinheit erfasst wird,
- Fig. 13: schematisch die Datenübertragung von den Sensoren zu einer Steuereinrichtung,
- Fig. 14: die Anordnung mehrerer Brauchwassererwärmungseinheiten 2 in einer Kaskadenanordnung,
- Fig. 15: schematisch die Steuerung der mehreren Brauchwassererwärmungseinheiten gemäß Fig. 14 und
- Fig. 16: schematisch den Regelkreis zur Regelung der Brauchwassererwärmungseinheiten.

Die nachfolgend beschriebene Wärmetauschereinheit weist ein Pumpensystem mit dem Pumpenaggregat bzw. der Umwälzpumpe 46 und gegebenenfalls der Umwälzpumpe 76 auf, welche durch eine Steuereinheit 101 auf Grundlage der Messwerte verschiedener Sensoren gesteuert bzw. geregelt werden. Dabei sind die Sensoren in der erfindungsgemäßen Weise über ein Datenerfassungsmodul mit der Steuereinheit verbunden.

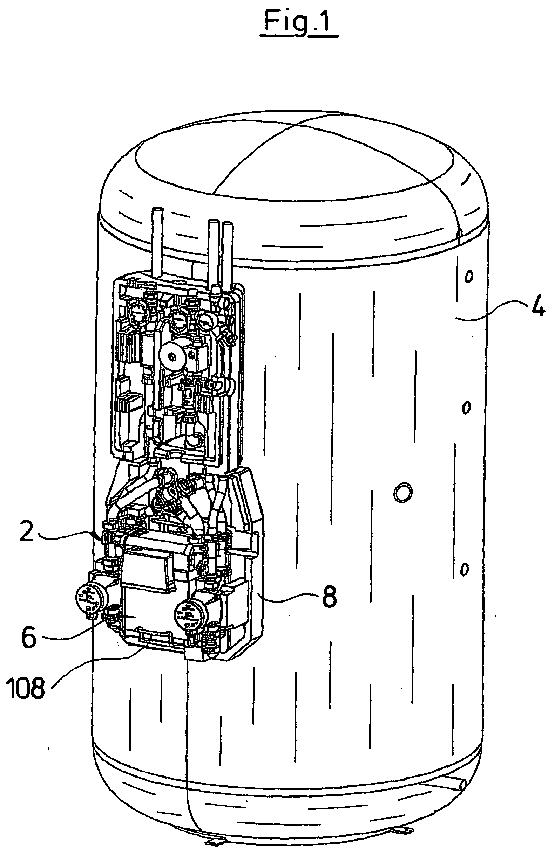

Die als Beispiel gezeigte Wärmetauschereinheit ist eine Brauchwassererwärmungseinheit 2 und zur Verwendung in einer Heizungsanlage vorgesehen. Im hier gezeigten Beispiel (Fig. 1) ist die Brauchwassererwärmungseinheit 2 an einem Wärmespeicher 4, beispielsweise einem Wasserspeicher, welcher von einer Solaranlage erwärmtes Heizungswasser speichert, angebracht. Aus dem Wärmespeicher 4 wird der Wärmetauscher 6 der Brauchwassererwärmungseinheit 2 mit Heizmedium zum Erwärmen von Brauchwasser versorgt. In Fig. 1 ist ein die Brauchwassererwärmungseinheit 2 umgebendes Gehäuse geöffnet dargestellt, d. h. der Frontdeckel ist abgenommen. In den übrigen Figuren ist die Brauchwassererwärmungseinheit 2 ohne umgebendes Gehäuse dargestellt.

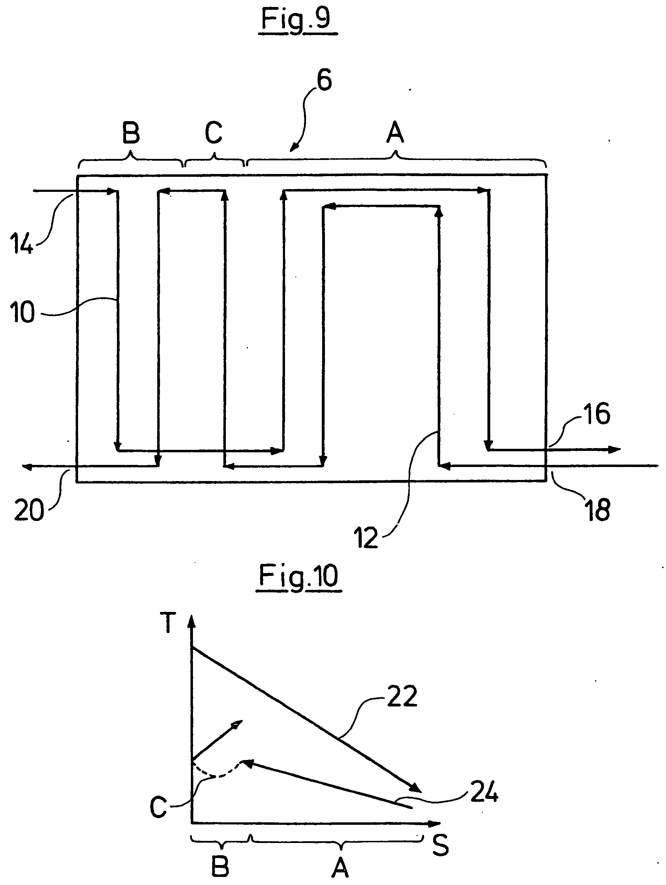

Zentraler Bestanteil der Wärmetauschereinheit bzw. Brauchwassererwärmungseinheit 2 ist ein Wärmetauscher 6 in Form eines Plattenwärmetauschers. Über den Wärmetauscher 6 wird zu erwärmendes Brauchwasser erwärmt und als erwärmtes Brauchwasser abgegeben, beispielsweise um in einem Haus Zapfstellen 7 an Waschbecken, Duschen, Badewannen etc. mit warmem Brauchwasser zu versorgen. Um das Brauchwasser zu erwärmen, wird der Wärmetauscher mit Heizmedium versorgt. Er weist in seinem Inneren zwei Strömungswege auf, wie schematisch in Fig. 9 dargestellt. Ein erster Strömungsweg 10 ist der Strömungsweg, durch welchen das Heizmedium durch den Wärmetauscher geführt wird. Der zweite Strömungsweg 12 ist der Strömungsweg, durch welchen das Brauchwasser durch den Wärmetauscher geleitet wird. Beide Strömungswege sind in bekannter Weise durch Platten voneinander getrennt, über welche ein Wärmeübergang von dem Heizmedium zu dem Brauchwasser möglich ist.

Die beiden äußeren Platten 13 des Plattenstapels bilden zwei einander entgegengesetzte Seitenflächen des Wärmetauschers 6. An diesen Seitenflächen sind die Fluidanschlüsse 14 bis 20 des Wärmetauschers 6 ausgebildet und werden, wie nachfolgend beschreiben, Anschlussarmaturen befestigt.

Durch den Eingang 14 tritt das Heizmedium in den Wärmetauscher 6 und durch den Ausgang 16 wieder aus. Das zu erwärmende Brauchwasser tritt an dem Eingang 18 in den Wärmetauscher 6 ein und an dem Ausgang 20 aus dem Wärmetauscher wieder aus. Wie in Fig. 9 schematisch dargestellt, ist der Wärmetauscher in drei Abschnitt A, B, C geteilt. In Strömungsrichtung des Brauchwassers durch den zweiten Strömungsweg 12 bildet der Abschnitt A einen ersten Abschnitt, in welchem der erste Strömungsweg 10 und der zweite Strömungsweg 12 im Gegenstrom aneinander vorbeigeführt sind. D. h. das zu erwärmende Brauchwasser und das Heizmedium strömen in entgegengesetzten Richtungen an den sie trennenden Platten des Wärmetauschers vorbei. Dies hat den Effekt, dass das kalte Brauchwasser, welches am Eingang 18 in den Wärmetauscher 6 eintritt, zunächst von dem bereits angekühlten am Ausgang 16 austretenden Heizmedium erwärmt wird und dann in Strömungsrichtung in die Nähe von immer wärmeren Heizmedium kommt. Der Wärmetauscher 6 weist einen zweiten Abschnitt B auf, in welchem der erste Strömungsweg 10 und der zweite Strömungsweg 12 dann nicht mehr in Gegenstromanordnung relativ zu einander geführt sind, sondern in einer Mitstromanordnung geführt sind, d. h. die Strömungen in dem ersten Strömungsweg 10 und im zweiten Strömungsweg 12 verlaufen gleichgerichtet zueinander in derselben Richtung entlang der sie trennenden Platten oder anderer sie trennender wärmeleitender Trennelemente.

Zwischen dem ersten Abschnitt A und dem zweiten Abschnitt B ist ein Umkehrabschnitt C ausgebildet, in welchem die relative Umkehr der Strömungsrichtungen in den Strömungswegen zueinander realisiert ist. Im hier gezeigten Beispiel sind die Abschnitte A, B und C des Wärmetauschers in einen Wärmetauscher integriert. Es ist jedoch zu verstehen, dass die Abschnitte A und B auch in separaten Wärmetauschern ausgebildet werden könnten und die Richtungsumkehr der Strömungen zueinander im Abschnitt C durch eine entsprechende Verrohrung der beiden Wärmetauscher realisiert werden könnte.

Durch die Umkehr zum Mitstromprinzip wird erreicht, dass eine Überhitzung des Brauchwassers verhindert wird, da das am Ausgang 20 austretenden erwärmte Brauchwasser im letzten Abschnitt seines Strömungsweges 12 nicht direkt durch das am Eingang 14 eintretenden heiße Heizmedium erwärmt wird, sondern durch bereits etwas abgekühltes Heizmedium. Dadurch ist die maximal zu erreichende Brauchwassertemperatur begrenzt. Dies ist in Fig. 10 zu erkennen. In dem in Fig. 10 gezeigten Diagramm ist die Temperatur T des Heizmediums als Kurve 22 über dem Weg s aufgetragen und die Temperatur T des Brauchwassers als Kurve 24 über dem Weg s aufgetragen. Es ist zu erkennen, dass der Austritt des Brauchwassers nicht im Bereich der höchsten Temperatur des eintretenden Heizmediums liegt, insofern kann maximal eine Temperatur erreicht werden, welche auf dem Niveau der Temperatur des Heizmediums im Bereich des Ausgangs 20 des Brauchwasser aus dem Wärmetauscher liegt.

An dem Plattenwärmetauscher 6 sind der Eingang 14 für das Heizmedium, der Ausgang 16 für das Heizmedium, der Eingang 18 für das zu erwärmende Brauchwasser sowie der Ausgang 20 für das erwärmte Brauchwasser als Fluidanschlüsse ausgebildet, an welchen wiederum Anschlussarmaturen angesetzt sind, welche die Verbindung zu weiteren Bauteilen und Rohrleitungen herstellen. An den Ausgang 20 für das erwärmte Brauchwasser ist eine erste Anschlussarmatur 26 angesetzt. Diese Anschlussarmatur weist ein Basiselement 28 auf, welches in identischer Ausgestaltung in der zweiten Anschlussarmatur 30 lediglich um 180° gedreht an den den Ausgang 16 und den Eingang 18 bildenden Fluidanschlüssen des Wärmetauschers 6 angesetzt ist. Dies hat den Vorteil, dass ein und dasselbe Basiselement 28 als erste Anschlussarmatur und als zweite Anschlussarmatur eingesetzt werden kann und die Teilevielfalt reduziert werden kann.

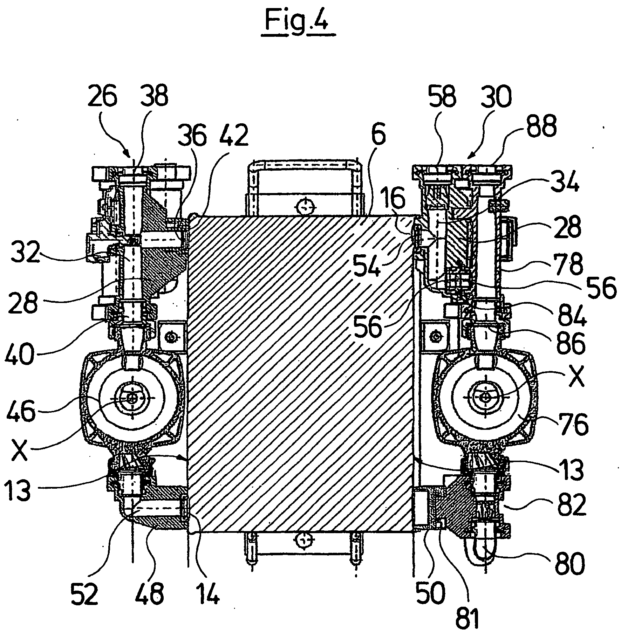

In dem Basiselement 28 sind zwei voneinander getrennte Strömungskanäle 32 und 34 ausgebildet. Der Strömungskanal 32 ist T-förmig ausgebildet und mündet zu drei Anschlussöffnungen 36, 38 und 40 (siehe Schnittansicht in Fig. 4). Bei Verwendung des Basiselementes 28 als erste Anschlussarmatur 26 ist die Anschlussöffnung 36 ungenutzt und durch die Wandung des Wärmetauschers 6 verschlossen, wobei zwischen dem Basiselement 28 und der Wandung des Wärmetauschers 6 an der Anschlussöffnung 38 eine Dichtung 42 zur Abdichtung angeordnet ist. Die Anschlussöffnung 38 bildet den Anschluss zur Verbindung mit einer Zufuhrleitung 44, welche mit dem Wärmespeicher 4 zur Zufuhr von heißem Heizmedium verbunden ist. An der entgegengesetzt gelegenen Anschlussöffnung 40 des Strömungskanals 32 ist an dem Basiselement 28 bei Verwendung in der ersten Anschlussarmatur 26 eine erste Umwälzpump 46 angeordnet, welche das Heizmedium dem Eingang 14 des Wärmetausches 6 zuführt. Dazu ist an dem Eingang 14 eine dritte Anschlussarmatur 48 angeordnet, welche in identischer Ausgestaltung lediglich um 180° gedreht an der entgegengesetzten Seite des Wärmetauschers 6, wie weiter unten beschrieben, als vierte Anschlussarmatur 50 angeordnet werden kann. D. h. auch die dritte Anschlussarmatur 48 und die vierte Anschlussarmatur 50 werden zumindest aus einem identischen Basiselement gebildet.

In der dritten Anschlussarmatur 48 ist ein Strömungskanal 52 ausgebildet, welcher den Druckstutzen der Umwälzpumpe 46 mit dem Eingang 14 des Wärmetauschers verbindet.

Der zweite Strömungskanal 34 in dem Basiselement 28 ist, wie in der Schnittansicht anhand der zweiten Anschlussarmatur 30 zu erkennen ist, ebenfalls T-förmig ausgebildet und weist drei Anschlussöffnungen 54, 56 und 58 auf. In der ersten Anschlussarmatur 26 ist die Anschlussöffnung 58 des zweiten Strömungskanals 34 verschlossen, z. B. durch einen eingesetzten Stopfen. Die Anschlussöffnung 54 ist mit dem Ausgang 20 des Wärmetauschers 6 verbunden, wobei ebenfalls eine Dichtung 42 zwischen der Anschlussarmatur 26 und dem Wärmetauscher 6 angeordnet ist. An die Anschlussöffnung 56 des zweiten Strömungskanals 34 ist in der ersten Anschlussarmatur 26 Anschlussteil 60 angesetzt, welches die Anschlussöffnung 58 über einen im Inneren des Anschlussteils 60 ausgebildeten Strömungskanal mit dem Leitungsanschluss 62 verbindet. Der Leitungsanschluss 62 dient zur Verbindung mit einer Warmwasserleitung, durch die das erwärmte Brauchwasser abgeführt wird.

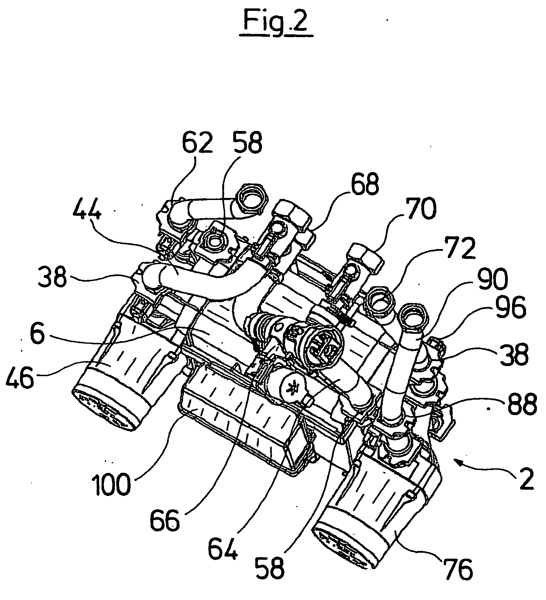

An der entgegengesetzten Seitenfläche des Plattenwärmetauschers 6, welcher die tragende Struktur der Brauchwassererwärmungseinheit bildet, ist das Basiselement 28 als zweite Anschlussarmatur 30 angesetzt. Durch die zweite Anschlussarmatur 30 werden der Ausgang 16 für das Heizmedium sowie der Eingang 18 für das kalte Brauchwasser mit der externen Installation verbunden. An den Ausgang 16 des Wärmetauschers schließt bei dieser um 180° gedrehten Anordnung des Basiselementes 28 die Anschlussöffnung 54 des zweiten Strömungskanals 34 an. Dieser zweite Strömungskanal 34 stellt eine Verbindung zu dem Leitungsanschluss bzw. der Anschlussöffnung 58 her, welche den Ausgang des abgekühlten Heizmediums bildet. An diese Anschlussöffnung 58 kann eine Leitung angeschlossen werden, welche das Heizmedium zurück in den Wärmespeicher 4 führt. Bei der in Fig. 2 gezeigten Ausführungsform, bei welcher gleichzeitig, wie unten beschrieben wird, eine Zirkulation des Brauchwasser vorgesehen ist, ist an die Anschlussöffnung 58 eine Leitung 64 angeschlossen, welche zu einem Umschaltventil 66 führt, welches wahlweise eine Verbindung der Leitung 64 zu den Anschlüssen 68 und 70 herstellt. Die Anschlüsse 68 und 70 dienen zu Verbindung mit dem Wärmespeicher 4, wobei diese Anschlüsse beispielsweise eine Verbindung zum Inneren des Wärmespeichers 4 an unterschiedlichen vertikalen Position herstellen kann, sodass je nach Temperatur des aus den Wärmetauscher 6 austretenden Heizmediums dieses durch Umschalten des Umschaltventils 66 an unterschiedlichen vertikalen Positionen in den Wärmespeicher 4 zurückgeführt werden kann, um eine dort vorhandene Schichtung des Heizmediums aufrechtzuerhalten. Die Umschaltfunktion ist insbesondere dann von Vorteil, wenn, wie unten beschrieben, ein Brauchwasserzirkulationsmodul 74 vorgesehen ist. Die Erwärmung des zirkulierten Brauchwassers erfordert einen geringeren Wärmebedarf, sodass dabei das Heizmedium mit höherer Temperatur in den Wärmespeicher 4 zurückströmt.

Der Strömungsweg 32 im Inneren des Basiselementes ist bei der zweiten Anschlussarmatur 30 mittels der Anschlussöffnung 36 mit dem Eingang 18 verbunden. An die Anschlussöffnung 38 wird eine Kaltwasserleitung 72 zur Zufuhr des kalten Brauchwassers angeschlossen. Durch diese Leitung tritt das kalte Wasser dann in den Eingang 18 in den Wärmetauscher ein.

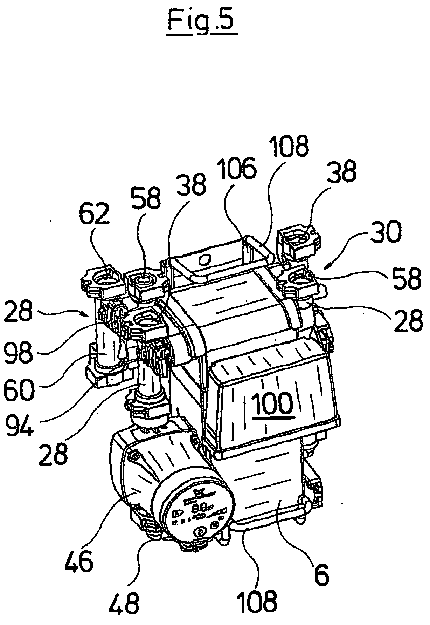

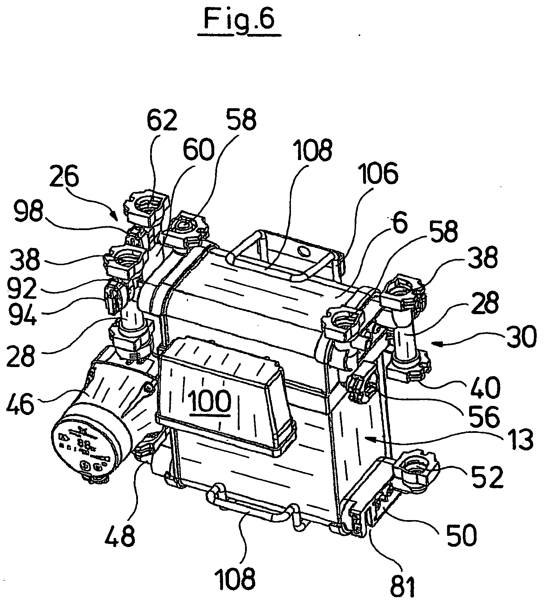

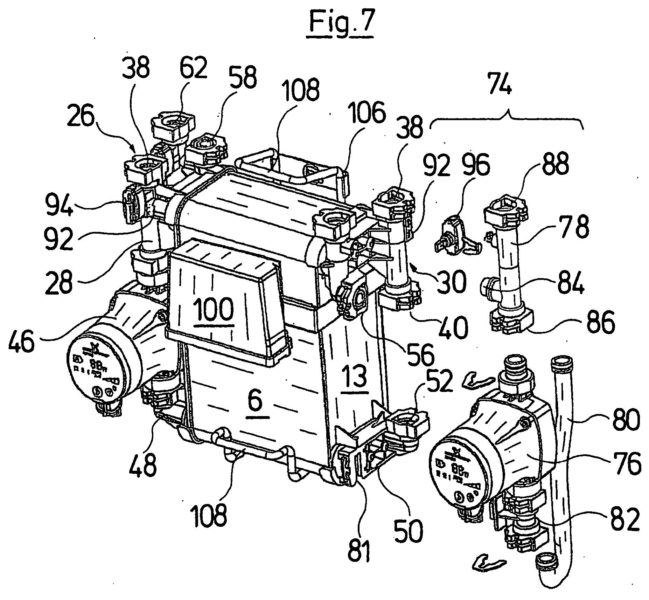

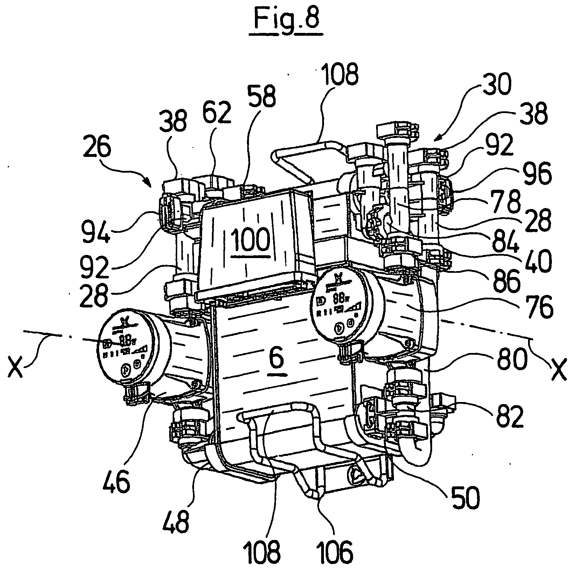

Die hier gezeigte Brauchwasserwärmungseinheit kann in zwei verschiedenen Ausführungsformen Verwendung finden, nämlich einmal mit einem Brauchwasserzirkulationsmodul 74 oder auch ohne dieses Brauchwasserzirkulationsmodul 74. In Fig. 1, 2, 4, 7 und 8 ist diese Brauchwasserzirkulationsmodul 74 an dem Wärmetauscher 6 angeordnet. Die Fig. 5 und 6 zeigen die Anordnung ohne das Brauchwasserzirkulationsmodul 74. Wenn das Brauchwasserzirkulationsmodul 74 nicht vorgesehen ist, ist die vierte Anschlussarmatur 50 nicht erforderlich und die Anschlussöffnung bzw. der Leitungsanschluss 40 des Basiselementes 28 der zweiten Anschlussarmatur 30 ist durch einen Stopfen verschlossen. Auch die Anschlussöffnung 56 des Strömungskanals 34 ist in diesem Fall durch einen Stopfen verschlossen.

Das Brauchwasserzirkulationsmodul 74 besteht aus einer zweiten Umwälzpumpe 76, welche der Zirkulation des Brauchwassers im Warmwasserteitungssystem eines Gebäudes dient. Zum Anschluss der zweiten Umwälzpumpe 76 sind ein Anschlussteil 78 und ein Rohr 80 vorgesehen. Zur Halterung der Pumpe 76 an dem Wärmetauscher 6 wird dazu am Ende einer Seitenfläche eine vierte Anschlussarmatur 50 angeordnet, welche identisch zu der dritten Anschlussarmatur 48 ist bzw. ein identisches Basiselement aufweist. Allerdings findet bei der Verwendung als vierte Anschlussarmatur 50 der Strömungskanal 52 keine Verwendung. An dem Basiselement der dritten und vierten Anschlussarmatur ist eine Aufnahme 81 ausgebildet, in welche ein Anschlusselement 82 eingesetzt wird, welches mit einem Druckstutzen der Umwälzpumpe 76 verbunden ist. Das Anschlusselement 82 weist in seinem Inneren einen Strömungskanal auf und stellt darüber eine Verbindung zu dem Rohr 80 her. Das Rohr 80 wird mit seinem dem Anschlusselement 82 abgewandten Ende mit der Anschlussöffnung 40 des Strömungskanals 32 in der zweiten Anschlussarmatur 30 verbunden, wobei die Anschlussöffnung 40 dann nicht durch einen Stopfen verschlossen ist. Auf diese Weise kann die als Zirkulationspumpe dienende Umwälzpumpe 46 einen Teil des erwärmten Brauchwassers zurück in den Strömungskanal 32 der zweiten Anschlussarmatur 30 und durch dessen Anschlussöffnung 36 in den Eingang 18 des Wärmetauschers zurückführen. D. h. im Strömungskanal 32 der zweiten Anschlussarmatur fließen zugeführten kaltes Brauchwasser durch die Anschlussöffnung 38 und durch die Zirkulationspumpe 76 zurückgefördertes Brauchwasser durch die Anschlussöffnung 40 zusammen.

Das Anschlussteil 48 ist auf das Basiselement 28 der zweiten Anschlussarmatur 30 so aufgesetzt, dass es mit einem verschlossenen Stutzen 84 in die Anschlussöffnung 56 des zweiten Strömungskanals 34 eingreift und so die Anschlussöffnung 56 verschließt, sodass zu deren Verschluss in der zweiten Anschlussarmatur 30 kein zusätzlicher Stopfen mehr erforderlich ist. Das Anschlussteil 78 ist im Übrigen rohrförmig ausgebildet und verbindet zwei an entgegengesetzten Enden gelegen Anschlussöffnungen 86 und 88. Der Stutzen 84 weist keine fluidleitende Verbindung zu der Verbindung zwischen den Leitungsanschlüssen bzw. Anschlussöffnungen 86 und 88 auf. Die Anschlussöffnung 86 ist mit dem Saugstutzen der zweiten Umwälzpumpe 76 verbunden und die Anschlussöffnung 88 bildet einen Anschluss, an welchen eine Zirkulationsleitung 90 angeschlossen wird. Durch Verwendung des Anschlussteiles 78 und einer vierten Anschlussarmatur 50, welche mit ihrem Basiselement identisch zu der dritten Anschlussarmatur 48 ausgebildet ist, kann somit mit wenigen zusätzlichen Teilen eine zweite Umwälzpumpe 76, welche eine Zirkulationspumpe darstellt, ebenfalls an dem als tragende Struktur dienenden Wärmetauscher 6 befestigt werden, und die Zirkulationsleitung über die Umwälzpumpe 46 direkt mit dem zweiten Strömungsweg 12 im Inneren des Wärmetauschers fluidleitend verbunden werden.

In dem Basiselement 28 der ersten und zweiten Anschlussarmaturen 26 und 30 ist im Strömungskanal 32 eine Sensoraufnahme 92 ausgebildet, welche zur Aufnahme eines Sensors dienen kann. Bei Verwendung des Basiselements 28 als zweite Anschlussarmatur 30 ist die Sensoraufnahme 92, wenn kein Brauchwasserzirkulationsmodul 74 angebracht ist, verschlossen. In der ersten Anschlussarmatur 26 ist in die Sensoraufnahme 92 ein Temperatursensor 94 eingesetzt, welcher die Temperatur des dem Wärmetauscher 6 zugeführten Heizmediums erfasst. Bei Verwendung des Brauchwasserzirkulationsmoduls 74 ist auch in die Sensoraufnahme 92 des Basiselementes 28 der zweiten Anschlussarmatur 30 ein Temperatursensor 96 eingesetzt, welcher zur Erfassung einer Brauchwasseranforderung dient und dessen spezielle Funktion weiter unten beschrieben wird. Darüber hinaus weist auch das Anschlussteil 60 eine Sensoraufnahme auf, in welcher ein Sensor 98 eingesetzt ist. Der Sensor 98 ist ein kombinierter Temperatur- und Strömungssensor, welcher die Temperatur und den Durchfluss des aus dem Ausgang 20 aus dem Wärmetauscher 6 durch den Strömungsweg 34 in der ersten Anschlussarmatur 26 austretenden erwärmten Brauchwassers erfasst. Es ist zu verstehen, dass auch die zuvor beschriebenen Temperatursensoren 94, 96 gegebenenfalls als kombinierte Temperatur- und Durchflusssensoren Verwendung finden könnten.

Durch den Sensor 98 kann zum einen die Temperatur des austretenden Brauchwassers erfasst werden und basierend auf dieser Temperatur und der von dem Temperatursensor 94 erfassten Temperatur des Heizmediums der erforderliche Volumenstrom des Heizmediums bestimmt werden und die erste Umwälzpumpe 46 entsprechend betrieben werden. Die dazu erforderliche Steuerung bzw. Regelung für die Umwälzpumpe 46 ist vorzugsweise als Regel- bzw. Steuerelektronik in die Umwälzpumpe 46 integriert.

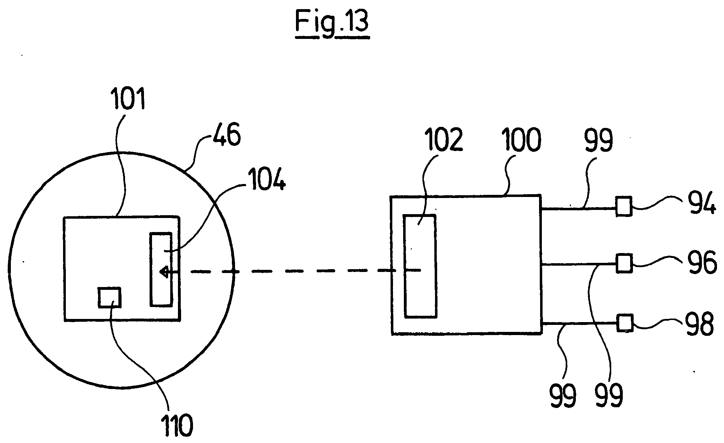

Die Sensoren 94, 96 und 98 sind über elektrische Leitungen 99 mit einer Sensorbox 100 verbunden, welche ein Datenerfassungsmodul bildet. Die Sensorbox 100 erfasst die von den Sensoren 94, 96 und 98 bereitgestellten Daten. Die Sensorbox 100 stellt die erfassten Daten, wie in Fig. 13 gezeigt, der Steuereinheit 101, welche in diesem Beispiel in die Steuerelektronik des Pumpenaggregates 46 integriert ist, zur Verfügung. In der Sensorbox 100 ist dazu eine Ausgabeschnittstelle 102 und in der Steuereinheit 101 eine korrespondierende Eingangschnittstelle 104 ausgebildet. Die Ausgabeschnittstelle 102 und die Eingangsschnittstelle 104 sind hier als Funkschnittellen ausgebildet, welche eine drahtlose Signalübertragung von der Sensorbox 100 zu der Steuereinheit 101 in dem Pumpenaggregat 46 ermöglichen. Dies ermöglicht einen sehr einfachen Anschluss des Pumpenaggregates 46 und auch der Sensoren 94, 96 und 98, da diese nicht direkt mit dem Pumpenaggregat 46 verbunden werden müssen. So können die Sensoren 94, 96 und 98 unabhängig von der Umwälzpumpe 46 angeschlossen und verdrahtet werden und die Umwälzpumpe 46 gegebenenfalls auch leicht ausgetauscht werden, ohne die Verkabelung der Sensoren zu beeinträchtigen. Die Steuereinheit 101 in der Umwälzpumpe 46 steuert bzw. regelt vorzugsweise nicht nur die Umwälzpumpe 46 sondern auch die Umwälzpumpe 76, wozu die Steuereinheit 101 in der Umwälzpumpe 46 vorzugsweise ebenfalls drahtlos über Funk mit der Umwälzpumpe 76 bzw. deren Steuereinrichtung kommunizieren kann. So können beide Umwälzpumpen 46 und 76 sehr leicht angeschlossen werden, da lediglich ein elektrischer Anschluss für die Netzstromversorgung erforderlich ist. Die gesamte Kommunikation für die Steuerung erfolgt drahtlos.

In dem Datenerfassungsmodul 100 bzw. der Sensorbox 100 kann auch bereits eine Signalaufbereitung der von den Sensoren 94, 96 und 98 gelieferten Signale erfolgen, um die erforderlichen Daten in einem vorbestimmten Format der Steuereinrichtung 101 zur Verfügung zu stellen. Die Steuereinheit 101 liest über die Eingangschnittstelle 104 bevorzugt nur die aktuell für die Steuerung benötigten Daten aus der Ausgabeschnittstelle 102 aus, sodass die Datenkommunikation auf ein Minimum beschränkt werden kann.

Die Steuereinheit 101 übernimmt vorzugsweise auch die Steuerung der Zirkulation, welche durch die Umwälzpumpe 76 bei Verwendung des Brauchwasserzirkulationsmoduls 74 bewirkt wird, in der Weise, dass die Umwälzpumpe 76 zur Zirkulation dann abgeschaltet wird, wenn der Temperatursensor 94 eine Temperatur des aus dem Wärmespeicher 4 zugeführten Heizmediums erfasst, welche unter einem vorbestimmten Grenzwert liegt. Auf diese Weise kann verhindert werden, dass der Wärmespeicher 4 aufgrund der Brauchwasserzirkulation übermäßig auskühlt und die Zirkulation kann stattdessen in Zeiten, in welchen die Wärmezufuhr zu dem Wärmespeicher 4, beispielsweise aufgrund fehlender Sonneneinstrahlung auf ein Solarmodul, zu gering ist, ausgesetzt werden.

Die Steuereinheit 101 steuert den Betrieb der Umwälzpumpe 46 in der Weise, dass die Umwälzpumpe 46 zunächst eingeschaltet wird, wenn ein Wärmebedarf zur Erwärmung des Brauchwassers gegeben ist, sodass Heizmedium von dem Wärmespeicher 4 dem Wärmetauscher 6 zugeführt wird. In dem Fall, dass kein Brauchwasserzirkulationsmodul 74 vorgesehen ist, wird dieser Wärmebedarf für das Brauchwasser über den kombinierten Temperaturdurchflusssensor 98 erfasst. Wenn dieser eine Strömung in dem Strömungsweg durch das Anschlussteil 60 erfasst, d. h. eine Brauchwasserströmung, heißt dies, dass eine Zapfstelle für warmes Brauchwasser geöffnet ist, sodass durch die Anschlussöffnung 38 kaltes Brauchwasser zuströmt und ein Wörmebedarf zur Erwärmung des Brauchwassers gegeben ist. So kann die Steuereinheit 101 die Umwälzpumpe 46 in diesem Fall in Betrieb nehmen.

Für den Fall, dass das Brauchwasserzirkulationsmodul 74 angeordnet ist, kann der Brauchwasserbedarf so nicht erfasst werden, da der Sensor 98 auch aufgrund der Zirkulation, welche von der zweiten Umwälzpumpe 76 verursacht wird, eine Strömung erfasst, wenn keine Zapfstelle für Brauchwasser geöffnet ist. In diesem Fall kann von dem Sensor 98 lediglich die Temperatur des aus dem Wärmetauscher 6 austretenden Brauchwassers erfasst werden und für den Fall, dass diese unter einem vorbestimmten Grenzwert liegt, die Umwälzpumpe 46 geschaltet werden, um die Wärmeverluste aufgrund der Zirkulation in der Weise auszugleichen, dass Heizmedium dem Wärmetauscher 6 zugeführt wird und so das zirkulierte Brauchwasser erwärmt wird.

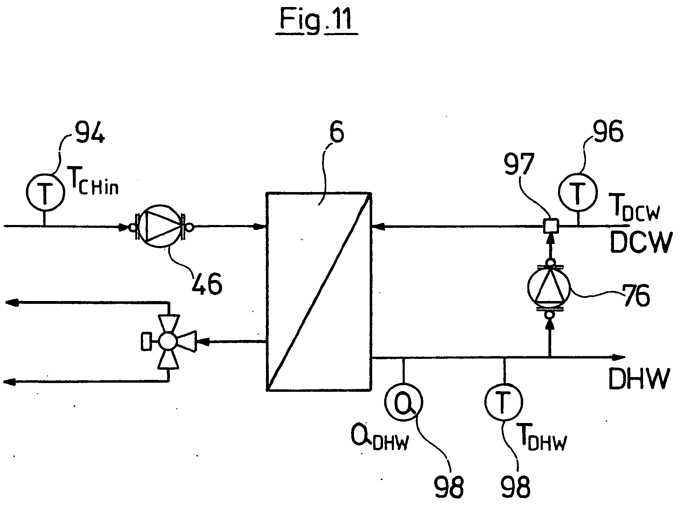

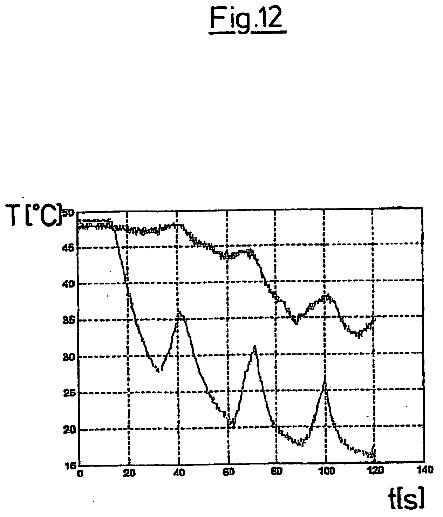

Um in diesem Fall einen Brauchwasserbedarf aufgrund der Öffnung einer Zapfstelle 7 zu erfassen, wird der Temperatursensor 96 genutzt. Dieser ist, wie in Fig. 11 schematisch dargestellt, nicht genau am Knotenpunkt des Strömungskanals 32 in dem Basiselement 28, in welchem die Abschnitte des Strömungskanals von den Anschlussöffnungen 36 und 38 sowie 40 zusammenlaufen, angeordnet, sondern ausgehend von diesem Knotenpunkt zu der Anschlussöffnung 38 hin versetzt. D. h. der Temperatursensor 96 befindet sich in dem Abschnitt des Strömungskanals, durch welchen das kalte Brauchwasser zugeführt wird. Wenn eine Zapfstelle für erwärmtes Brauchwasser geöffnet wird, führt dies zu einer Strömung von kaltem Brauchwasser in diesem Leitungsabschnitt, sodass, wie in der unteren Kurve in Fig. 12 zu erkennen ist, von dem Sensor 96 in dem Abschnitt des ersten Strömungskanals 32, welcher zu der Anschlussöffnung 38 verläuft, ein Temperaturabfall erfasst wird. Bei Erfassung eines solchen Temperaturabfalls schaltet die Steuereinheit 101 die Umwälzpumpe 46 zur Zufuhr von Heizmedium ein. In Fig. 12 sind mehrere aufeinanderfolgende Brauchwasseranforderungen dargestellt, welche jeweils wieder zu einem Temperaturabfall und bei Beendigung der Anforderung von erwärmten Brauchwasser wieder zu einem Temperaturanstieg führen, da sich das in dem Leitungsabschnitt, in welchem der Temperatursensor 96 angeordnet ist, befindliche Wasser dann wieder erwärmt.

Der Temperatursensor 96 ist in der zweiten Anschlussarmatur 30 geringfügig oberhalb des Knotenpunktes, an welchem sich die Strömungswege, bzw. Abschnitte des Strömungskanals 32 von den Anschlussöffnungen 36, 38 und 40 treffen, angeordnet. Auf diese Weise ist sichergestellt, dass sich das Wasser in dem Leitungsabschnitt, in welchem der Sensor 96 gelegen ist, bei Schließen der Zapfstelle für Brauchwasser und somit nicht vorhandener Strömung wieder durch das von der Anschlussöffnung 40 zu dem Eingang 16 strömende von der Umwälzpumpe 46 zirkulierte Brauchwasser langsam durch Wärmeübertragung erwärmt wird.

Wie oben bereits beschrieben, bildet der Wärmetauschers 6 das tragende Element der Brauchwassererwarmungseinheit 2, an welchem die Anschlussarmaturen 26, 30, 48 und gegebenenfalls 50 mit den Pumpen 46 und gegebenenfalls 76 sowie die Sensorbox 100 befestigt sind. Die Brauchwassererwärmungseinheit 2 bildet somit ein integriertes Modul, welches als vorgefertigte Einheit in eine Heizungsanlage bzw. in ein Heizungssystem eingebaut werden kann. Die Umwälzpumpen 46 und 76 sind relativ zu dem Wärmetauscher 6 so angeordnet, dass sich ihre Drehachsen X parallel zu den Oberflächen der Platten, insbesondere der äußeren Platten 13 erstrecken. Um den Wärmetauscher 6 mit den daran angebrachten Komponenten seinerseits an den Wärmespeicher 4 oder an einem anderen Element einer Heizungsanlage befestigen zu können, ist an dem Wärmetauscher 6 eine Haltevorrichtung in Form eines Bügels 106 angebracht. Der Bügel 106 bildet zum einen eine Befestigungsvorrichtung zur Befestigung an dem Wärmespeicher 4 und bildet darüber hinaus Griffelemente 108 an welchen die gesamte Brauchwassererwärmungseinheit 2 ergriffen werden kann, wodurch eine einfache Handhabung der gesamten Einheit bei der Montage möglich ist.

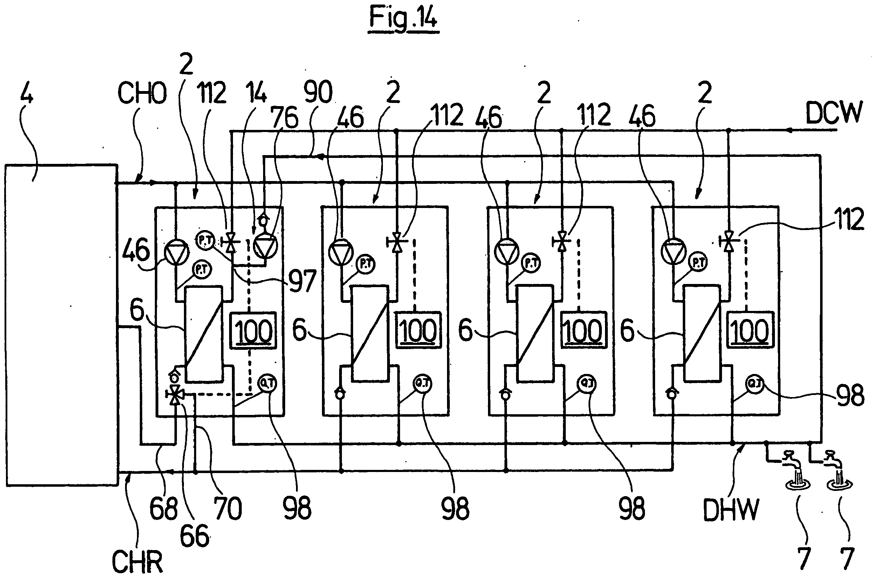

Fig. 14 zeigt eine spezielle Anordnung von Brauchwassererwärmungseinheiten 2. Bei dieser Anordnung sind, um einen größeren Brauchwasserbedarf befriedigen zu können, vier Brauchwassererwärmungseinheiten 2 gemäß der vorangehenden Beschreibung kaskadenartig parallel geschaltet. In dem gezeigten Beispiel sind vier Brauchwassererwärmungseinheiten 2 gezeigt. Es ist jedoch zu verstehen, dass in Abhängigkeit des maximalen Brauchwasserbedarfs auch weniger oder mehr Brauchwasserwärmungseinheiten 2 in entsprechender Weise angeordnet werden können. Alle Brauchwassererwärmungseinheiten 2 werden im gezeigten Beispiel mit Heizmedium aus einem gemeinsamen Wärmespeicher 4 versorgt. Die Brauchwassererwärmungseinheiten 2 sind bis auf eine identisch ausgebildet. Die erste Brauchwassererwärmungseinheit 2, diejenige, welche in Fig. 14 benachbart zu dem Wärmespeicher 4 gelegen ist, ist gemäß der Ausgestaltung, welche in den Fig. 1, 2, 4, 7, 8 und 11 gezeigt ist, ausgebildet, d. h. diese erste Brauchwassererwärmungseinheit 2 weist ein Brauchwasserzirkulationsmodul 74 auf. Das Brauchwasserzirkulationsmodul 74, welches die zweite Umwälzpumpe 46 aufweist, ist mit der Zirkulationsleitung 90 verbunden. Diese schließt sich an der am entferntesten gelegenen Zapfstelle 7 an die Leitung für erwärmtes Brauchwasser DHW an. Auf diese Weise kann erwärmtes Brauchwasser durch das gesamte Leitungssystem, welches die Zapfstellen 7 mit erwärmten Brauchwasser versorgt, zirkuliert werden. Die Funktion dieser Brauchwassererwärmungseinheit 2 mit Brauchwasserzirkulationsmodul 74 entspricht grundsätzlich der obigen Beschreibung. Die drei übrigen Brauchwassererwärmungseinheiten 2 sind ohne Brauchwasserzirkulationsmodul 74 ausgebildet, d. h. wie in der Fig. 5 gezeigt.

Jede der Brauchwassererwärmungseinheiten 2 gemäß Fig. 14 weist eine in die Umwälzpumpe 46 integrierte Steuereinheit 101 sowie eine separate Sensorbox 100 auf. Die einzelnen Steuereinheiten 101 der mehreren Brauchwassererwärmungsmodule 2 kommunizieren über Funkschnittstellen 110 (siehe Fig. 13) miteinander. In der ersten Brauchwassererwärmungseinheit 2 kann die Funkschnittstelle 110 auch zur Kommunikation mit der zweiten Umwälzpumpe 76 und gegebenenfalls dem Umschaltventil 66 Verwendung finden. Allerdings ist es auch möglich, dass das Umschaltventil 66 über die Sensorbox 100 angesteuert wird und dazu mit der Sensorbox 100 über eine elektrische Anschlussleitung verbunden ist.

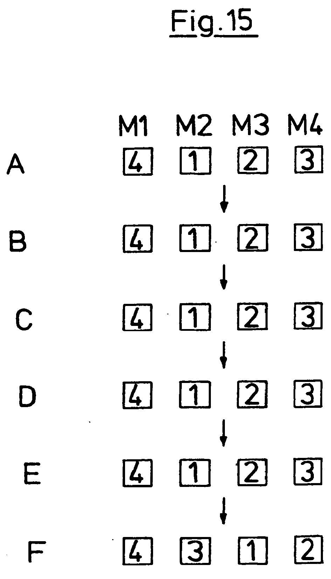

Die Steuereinheiten 101 aller Brauchwassererwärmungseinheiten 2 sind identisch ausgebildet und führen gemeinsam eine Steuerung der Kaskadenanordnung durch, wie sie anhand von Fig. 15 nun näher beschrieben wird.

In Fig. 15 sind die vier Brauchwassererwärmungseinheiten 2 als M1, M2, M3 und M4 bezeichnet. In den darunter angeordneten Kästchen ist durch Zahlen 1 bis 4 die Startreihenfolge der Brauchwassererwärmungseinheiten 2 dargestellt. Diejenige Brauchwassererwärmungseinheit 2, welche die Position 1 in der Startreihenfolge inne hat (im ersten Schritt M2) übernimmt eine Führungsfunktion, d. h. ist die führende Brauchwassererwärmungseinheit 2, d. h. deren Steuereinheit 101 veranlasst auch das Ein- und Ausschalten der weiteren Brauchwassererwärmungseinheiten 2.

Wenn es zu einer Brauchwasseranforderung kommt, d. h. eine der Zapfstellen 7 geöffnet wird, wird dies in der führenden Brauchwassererwärmungseinheit 2, wie oben beschrieben, durch den kombinierten Temperatur-Durchflusssensor 98 erfasst. Bei den mit M2 bis M4 gekennzeichneten Brauchwassererwärmungseinheiten 2 handelt es sich um die in Fig. 14 gezeigten Brauchwassererwärmungseinheiten 2 ohne Brauchwasserzirkulationsmodul 74. Die das Brauchwasserzirkulationsmodul 74 aufweisende Brauchwassererwärmungseinheit 2 ist das in Fig. 15 mit M1 gekennzeichnete Modul. Dieses übernimmt nie eine Führungsfunktion. Wenn nun das führende Modul M2 im Schritt A eine Brauchwasseranforderung erkennt, wird zunächst diese Brauchwassererwärmungseinheit 2 in Betrieb genommen, d. h. die Umwälzpumpe 46 fördert Heizmedium zu dem zugehörigen Wärmetauscher 6. Wenn nun vom Schritt B zum C die Brauchwassererförderung abgeschaltet wird, ist diese führende Brauchwassererwärmungseinheit 2 im Schritt C immer noch erwärmt. Wenn nun vom Schritt C zum D erneut eine Brauchwasseranforderung durch Öffnen einer Zapfstelle 7 stattfindet, wird daher wiederum diese führende Brauchwassererwärmungseinheit 2 (M2) in Betrieb genommen. Wenn nun der Brauchwasserbedarf durch Öffnen beispielsweise einer weiteren Zapfstelle 7 steigt, wird im Schritt E eine nächste Brauchwassererwärmungseinheit 2 zugeschaltet, indem die Steuereinheit 101 der führenden Brauchwassererwärmungseinheit 2 (M2) der Brauchwassererwärmungseinheit 2 mit der zweiten Position in der Startreihenfolge (hier M3) ein Signal zur Betriebsaufnahme sendet. Deren Steuereinheit 101 nimmt dann entsprechend die Umwälzpumpe 46 dieser weiteren Brauchwassererwärmungseinheit 2 (M3) in Betrieb, um deren Wärmetauscher 6 mit Heizmedium zu versorgen.

Wenn nun vom Schritt E zum Schritt F die Brauchwasseranforderung wieder abgestellt wird, wird die Brauchwassererwärmungseinheit 2 abgeschaltet und die Steuereinheiten 101 der einzelnen Brauchwassererwärmungseinheiten 2 setzten untereinander die Startreihenfolge neu fest. Dies geschieht in der Weise, dass in der Startreihenfolge nun die Brauchwassererwärmungseinheit 2, welche zuletzt zugeschaltet wurde, die erste Position übernimmt und die zuerst eingeschaltete Brauchwassererwärmungseinheit 2, d. h. die bislang führende Brauchwassererwärmungseinheit 2, an die letzte Position rückt (hier M2). Auch die Führungsfunktion wechselt entsprechend zu der Brauchwassererwärmungseinheit 2, welche in der Startreihenfolge nun an erster Position steht (M2). Auf diese Weise wird eine gleichmäßige Nutzung der Brauchwasserwärmungseinheiten 2 sichergestellt und gleichzeitig erreicht, dass die Brauchwassererwärmungseinheit 2, welche zuerst in Betrieb genommen wird, vorzugsweise eine Brauchwassererwärmungseinheit 2 ist, welche noch Restwärme aufweist. Die Brauchwassererwärmungseinheit 2 mit dem Brauchwasserzirkulationsmodul 74 behält stets die letzte Position in der Startreihenfolge, d. h. diese wird nur bei maximaler Last zugeschaltet und dient im Übrigen nur dazu, dass zirkulierte Brauchwasser zu erwärmen. Sollte eine Brauchwassererwärmungseinheit 2 defekt sein oder ausfallen, so wird diese vollständig aus der Startreihenfolge herausgenommen, d. h. überhaupt nicht mehr in Betrieb genommen. Dies geschieht alles durch Kommunikation der identischen Steuereinheiten 101 untereinander, sodass auf eine zentrale Steuerung verzichtet werden kann.

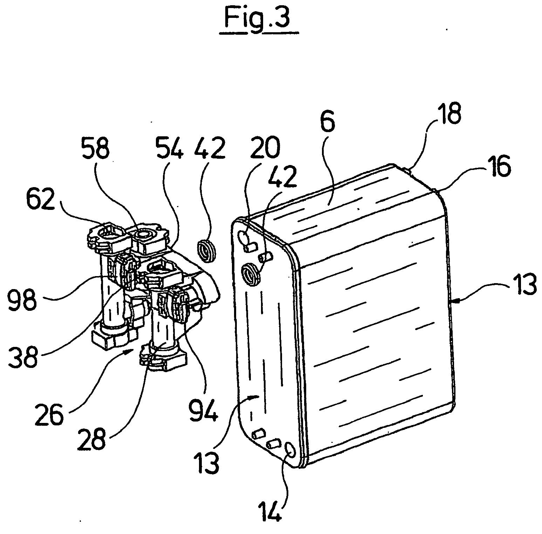

Zum Abschalten der Brauchwassererwärmungseinheiten 2, wenn die kein Brauchwasser erwärmen, ist zusätzlich ein oben anhand der Fig. 1 bis 13 nicht beschriebenes Ventil 112 in der Eingangsleitung für kaltes Brauchwasser DCW jeder Brauchwassererwärmungseinheit 2 angeordnet. Dieses Ventil 112 wird über die Sensorbox 100 von der Steuereinheit 101 angesteuert. Das Ventil 112 ist vorzugsweise über eine elektrische Anschlussleitung mit der Sensorbox 100 verbunden und die Steuereinheit 101 sendet über die Eingangsschnittstelle 104 und die Ausgabeschnittstelle 102 an die Sensorbox 100 ein Signal zum Öffnen und Schließen des Ventils 112. Wenn das Ventil 112 geschlossen ist, wird erreicht, dass kein Brauchwasser durch den jeweiligen Wärmetauscher 6 fließt, sodass verhindert wird, dass kaltes Brauchwasser durch den Wärmetauscher 6 der nicht genutzten Brauchwassererwärmungseinheiten 2 in die Ausgangsleitung für erwärmtes Brauchwasser DHW strömt.

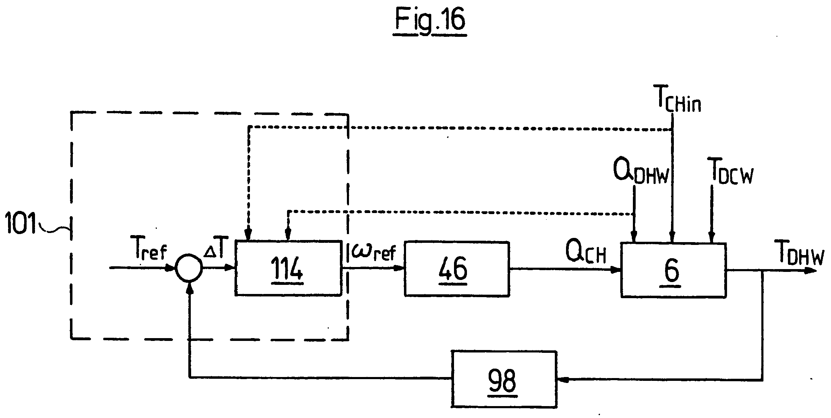

Anhand von Fig. 16 wird nun die Temperaturregelung des erwärmten Brauchwassers DHW in einer Brauchwassererwärmungseinheit 2 gemäß der obigen Beschreibung beschrieben. In der Steuereinheit 101 ist ein Regler 114 angeordnet, welchem eine Solltemperatur T_{ref} für das erwärmte Brauchwasser DHW vorgegeben wird. Diese Solltemperatur kann beispielsweise an der Steuereinheit 101 in der Umwälzpumpe 46 einstellbar sein. Dazu können an der Umwälzpumpe 46 Bedienelemente vorgesehen sein. Alternativ kann über eine drahtlose Schnittstelle, beispielsweise Infrarot oder Funk, auch eine Einstellung mittels einer Fernbedienung oder über eine Anlagenautomatisation erfolgen. Von dem Sollwert T_{ref} wird die von Sensor 98 erfasste Isttemperatur T_{DHW} des erwärmten Brauchwassers DHW subtrahiert. Die Differenz wird als Regeldifferenz ΔT dem Regler 114 zugeführt. Dieser gibt eine Solldrehzahl ω_{ref} für die Umwälzpumpe 76 aus, mit welcher die Ansteuerung der Umwälz pumpe 46 erfolgt, sodass diese einen Volumenstrom Q_{CH} von Heizmedium dem Wärmetauscher 6 zuführt. In diesem Wärmetauscher 6 wird dann das einströmende kalte Brauchwasser DCW erwärmt, sodass es ausgangsseitig des Wärmetauschers 6 die Ausgangstemperatur T_{DHW} hat. Dieser Istwert T_{DHW} wird dann, wie beschrieben, von dem Sensor 98 erfasst und dem Regler wieder zugeführt. D. h. erfindungsgemäß wird die Drehzahl der Umwälzpumpe 46 und damit der Volumenstrom Q_{CH} des Heizmediums in Abhängigkeit der Ausgangstemperatur des warmen Brauchwassers DHW geregelt.

Um ein schnelles Ansprechverhalten zu erreichen, ist in diesem Beispiel darüber hinaus eine Störgrößenaufschaltung im Regler 114 vorgesehen. Dazu wird auch der Volumenstrom des Brauchwassers über den Sensor 98 erfasst und dieser Brauchwasservolumenstrom Q_{DHW} dem Regler 114 als Störgröße aufgeschaltet. Darüber hinaus wird über Temperatursensor 94 die Temperatur T_{CHin} des von der Umwälzpumpe 46 dem Wärmetauscher 6 zugeführten Heizmediums erfasst und dem Regler 114 als Störgröße aufgeschaltet. Unter Berücksichtigung dieser Störgrößen wird die Solldrehzahl ω_{ref} der Umwälzpumpe 46 entsprechend eingestellt, sodass beispielsweise bei kälterem Heizmedium und/oder höherem Brauchwasservolumenstrom gleich die Drehzahl der Umwälzpumpe 46 erhöht werden kann, um schneller die geforderte Solltemperatur T_{ref} für das zu erwärmende Brauchwasser zu erreichen. Eine weitere Störgröße bzw. ein weiterer Parameter, welches Einfluss auf die Brauchwassertemperatur T_{DHW} hat ist die Temperatur T_{DCW} des einströmenden kalten Brauchwasser DCW. Im gezeigten Beispiel wird diese jedoch dem Regler 114 nicht als Störgröße aufgeschaltet, da die Kaltwassertemperatur in der Regel im Wesentlichen konstant ist. Für den Fall, dass die Kaltwassertemperatur erheblichen Schwankungen unterliegen kann, wäre es jedoch denkbar, auch die Temperatur T_{DCW} als Störgröße dem Regler 114 aufzuschalten.

### Bezugszeichenliste

- 2: - Brauchwassererwärmungseinheit
- 4: - Wärmespeicher
- 6: - Wärmetauscher
- 7: - Zapfstelle
- 8: - Gehäuse
- 10: - erster Strömungsweg für das Heizmedium
- 12: - zweiter Strömungsweg für das Brauchwasser
- 13: - äußere Platten
- 14: - Eingang
- 16: - Ausgang
- 18: - Eingang
- 20: - Ausgang
- 22: - Temperaturkurve des Heizmediums
- 24: - Temperaturkurve des Brauchwassers
- 26: - Erste Anschlussarmatur
- 28: - Basiselement
- 30: - Zweite Anschlussarmatur
- 32, 34: - Strömungskanäle
- 36, 38, 40: - Anschlussöffnungen bzw. Leitungsanschlüsse
- 42: - Dichtungen
- 44: - Zufuhrleitung
- 46: - Erste Umwälzpumpe
- 48: - Dritte Anschlussarmatur
- 50: - Vierte Anschlussarmatur
- 52: - Strömungskanal
- 54, 56, 58: - Anschlussöffnungen bzw. Leitungsanschlüsse
- 60: - Anschlussteil
- 62: - Leitungsanschluss
- 64: - Leitung
- 66: - Umschaltventil
- 68, 70: - Anschlüsse
- 72: - Kaltwasserleitung
- 74: - Brauchwasserzirkulationsmodul
- 76: - Zweite Umwälzpumpe
- 78: - Anschlussteil
- 80: - Rohr
- 81: - Aufnahme
- 82: - Anschlusselement
- 84: - Stutzen
- 86, 88: - Anschlussöffnungen
- 90: - Zirkulationsleitung
- 92: - Sensoraufnahme
- 94, 96: - Temperatursensoren
- 97: - Knotenpunkt
- 98: - Sensor
- 99: - Leitungen
- 100: - Sensorbox
- 101: - Steuereinheit bzw. Steuer- und Regelelektronik
- 102: - Ausgabeschnittstelle
- 104: - Eingangsschnittstelle
- 106: - Bügel
- 108: - Hangriffe
- 110: - Funkschnittstelle
- 112: - Ventil

- DCW: - kaltes Brauchwasser
- DHW: - warmes Brauchwasser
- CHO: - heißes Heizmedium, Heizmediumzufuhr
- CHR: - kaltes Heizmedium, Heizmediumrückfluss
- T_{ref}: - Solltemperatur
- T_{DHW}: - Temperatur des erwärmten Brauchwassers
- T_{DCW}: - Temperatur des kalten Brauchwassers
- T_{CHin}: - Temperatur des Heizmediums
- Q_{DHW}: - Brauchwasservolumenstrom
- Q_{CH}: - Heizmediumvolumenstrom
- ΔT: - Regeldifferenz
- ω_{ref}: - Solldrehzahl

## Patentansprüche

1. Pumpensystem mit zumindest einem Pumpenaggregat (46, 76), einer Steuereinheit (101) zur Steuerung des Pumpenaggregates (46, 76) und zumindest einem Sensor (94, 96, 98), **dadurch gekennzeichnet, dass**
der Sensor (94, 96, 98) mit einem räumlich von der Steuereinheit (101) getrennten Datenerfassungsmodul (100) verbunden ist, welches die Ausgangssignale des Sensors (94, 96, 98) erfasst,
das Datenerfassungsmodul (100) eine Ausgabeschnittstelle (102) aufweist, an welcher es die erfassten Sensorsignale und/oder daraus abgeleitete Daten bereitstellt, und
die Steuereinheit (101) mit einer Eingangsschnittstelle (104) zur Übernahme von Signalen oder Daten von der Ausgabeschnittstelle (102) versehen ist.

2. Pumpensystem nach Anspruch 1, **dadurch gekennzeichnet, dass** der zumindest eine Sensor (94, 96, 98) mit dem Datenerfassungsmodul (100) über ein Kabel (99) verbunden ist.

3. Pumpensystem nach Anspruch 1 oder 2, **dadurch gekennzeichnet, dass** die Ausgabeschnittstelle (102) und die Eingangsschnittstelle (104) als drahtlose Schnittstellen ausgebildet sind.

4. Pumpensystem nach Anspruch 3, **dadurch gekennzeichnet, dass** Ausgabeschnittstelle (102) und die Eingangsschnittstelle (104) als Funkschnittstellen ausgebildet sind.

5. Pumpensystem nach einem der vorangehenden Ansprüche, **dadurch gekennzeichnet, dass** die Steuereinheit (101) in das Pumpenaggregat (46) integriert ist.

6. Pumpensystem nach einem der vorangehenden Ansprüche, **dadurch gekennzeichnet, dass** mehrere Sensoren (94, 96, 98) mit dem Datenerfassungsmodul (100) verbunden sind und das Datenerfassungsmodul (100) die Sensorsignale aller Sensoren (94, 96, 98) und/oder aus diesen abgeleitete Daten an der Ausgabeschnittstelle (102) zur Übergabe an die Eingangsschnittstelle (104) der Steuereinheit (101) bereitstellt.

7. Pumpensystem nach einem der vorangehenden Ansprüche, **dadurch gekennzeichnet, dass** die Steuereinheit (101), deren Eingangsschnittstelle (104) und die Ausgabeschnittstelle (102) derart ausgestaltet sind, dass die Steuereinheit (101) über die Eingangsschnittstelle (104) von der Ausgabeschnittstelle (102) lediglich aktuell von der Steuereinheit (101) benötigte Daten oder Signale abruft.

8. Pumpensystem nach einem der vorangehenden Ansprüche, **dadurch gekennzeichnet, dass** das Pumpenaggregat (46) ein Umwälzpumpenaggregat ist

9. Pumpensystem nach Anspruch 8, **dadurch gekennzeichnet, dass** das Pumpenaggregat (46) ein Heizungsumwätzpumpenaggregat ist.

10. Pumpensystem nach einem der vorangehenden Ansprüche, **dadurch gekennzeichnet, dass** die Steuereinheit (101) zur Steuerung mehrerer Pumpenaggregate (46) und/oder Ventile (66, 112) ausgebildet ist.

11. Pumpensystem nach Anspruch 10, **dadurch gekennzeichnet, dass** die Steuereinheit (101) in ein Pumpenaggregat (46) integriert ist und eine Kommunikationsschnittstelle (110) zur Kommunikation mit weiteren Pumpenaggregaten (76) zu deren Steuerung aufweist.

12. Pumpensystem nach einem der vorangehenden Ansprüche, **dadurch gekennzeichnet, dass** der zumindest eine Sensor (94, 96, 98) ein Temperatur-, Absolut- oder Differenzdruck- und/oder Durchflusssensor ist.

13. Pumpensystem nach einem der vorangehenden Ansprüche, **dadurch gekennzeichnet, dass** es Teil einer Brauchwassererwärmungseinrichtung ist.

## Claims

1. A pump system with at least one pump assembly (46, 76), a control unit (101) for controlling the pump assembly (46, 76) and at least one sensor (94, 96, 98), **characterised in that** the sensor (94, 96, 98) is connected to a data acquisition module (100) which is spatially separated from the control unit (101) and which acquires the output signals of the sensor (94, 96, 98),
the data acquisition module (100) comprises an output interface (102), at which it makes available the acquired sensor signals and/or data derived therefrom, and
the control unit (101) is provided with an input interface (104) for receiving signals or data from the output interface (102).

2. A pump system according to claim 1, **characterised in that** the at least one sensor (94, 96, 98) is connected to the data acquisition module (100) via a cable (99).

3. The pump system according to claim 1 or 2, **characterised in that** the output interface (102) and the input interface (104) are formed as wireless interfaces.

4. The pump system according to claim 3, **characterised in that** the output interface (102) and the input interface (104) are designed as radio interfaces.

5. A pump system according to one of the preceding claims, **characterised in that** the control unit (101) is integrated in the pump assembly (46).

6. A pump system according to one of the preceding claims, **characterised in that** several sensors (94, 96, 98) are connected to the data acquisition module (100), and the data acquisition module (100) makes available the sensor signals of all sensors (94, 96, 98) and/or data derived therefrom, at the output interface (102), for transfer to the input interface (104) of the control unit (101).

7. A pump system according to one of the preceding claims, **characterised in that** the control unit (101), its input interface (104) and the output interface (102) are designed in a manner such that the control unit (101) via the input interface (104) only calls up data or signals from the output interface (102), which are currently needed by the control unit (101).

8. A pump system according one of the preceding claims, **characterised in that** the pump assembly (46) is a circulation pump assembly.

9. A pump system according to claim 8, characetrised in that the pump assembly (46) is a heating circulation pump assembly.

10. A pump system according to one of the preceding claims, **characterised in that** the control unit (101) is designed to control several pump assemblies (46) and/or valves (66, 112).

11. A pump system according to claim 10, **characterised in that** the control unit (101) is integrated into a pump assembly (46) and comprises a communication interface (110) for communication with further pump assemblies (76) for their control.

12. A pump system according to one of the preceding claims, **characterised in that** the at least one sensor (94, 96, 98) is a temperature, absolute or differential pressure and/or volume flow rate sensor.

13. A pump system according to one of the preceding claims, **characterised in that** it is part of a service water heating device.

## Revendications

1. Système de pompe, comprenant au moins un groupe motopompe (46, 76), une unité de commande (101) pour la commande du groupe motopompe (46, 76) et au moins un capteur (94, 96, 98), **caractérisé en ce que**
le capteur (94, 96, 98) est relié à un module d'acquisition de données (100) séparé spatialement de l'unité de commande (101), qui détecte les signaux de sortie du capteur (94, 96, 98),
le module d'acquisition de données (100) comporte une interface de sortie (102) à laquelle il fournit les signaux de capteurs détectés et/ou des données dérivées de ceux-ci, et
l'unité de commande (101) est pourvue d'une interface d'entrée (104) destinée à la reprise de signaux ou données provenant de l'interface de sortie (102).

2. Système de pompe selon la revendication 1, **caractérisé en ce que** le capteur (94, 96, 98), au moins au nombre de un, est relié au module d'acquisition de données (100) par l'intermédiaire d'un câble (99).

3. Système de pompe selon la revendication 1 ou 2, **caractérisé en ce que** l'interface de sortie (102) et l'interface d'entrée (104) sont réalisées sous la forme d'interfaces sans fil.

4. Système de pompe selon la revendication 3, **caractérisé en ce que** l'interface de sortie (102) et l'interface d'entrée (104) sont réalisées sous la forme d'interfaces radio.

5. Système de pompe selon l'une des revendications précédentes, **caractérisé en ce que** l'unité de commande (101) est intégrée dans le groupe motopompe (46).

6. Système de pompe selon l'une des revendications précédentes, **caractérisé en ce que** plusieurs capteurs (94, 96, 98) sont reliés au module d'acquisition de données (100) et **en ce que** le module d'acquisition de données (100) fournit les signaux de tous les capteurs (94, 96, 98) et/ou les données dérivées de ceux-ci à l'interface de sortie (102) pour les transférer à l'interface d'entrée (104) de l'unité de commande (101).

7. Système de pompe selon l'une des revendications précédentes, **caractérisé en ce que** l'unité de commande (101), son interface d'entrée (104) et l'interface de sortie (102) sont configurées de façon telle que l'unité de commande (101) récupère de l'interface de sortie (102), via l'interface d'entrée (104), uniquement les données ou signaux dont l'unité de commande (101) a alors besoin.

8. Système de pompe selon l'une des revendications précédentes, **caractérisé en ce que** le groupe motopompe (46) est un groupe motopompe de circulation.

9. Système de pompe selon la revendication 8, **caractérisé en ce que** le groupe motopompe (46) est un groupe motopompe de circulation de chauffage.

10. Système de pompe selon l'une des revendications précédentes, **caractérisé en ce que** l'unité de commande (101) est conçue pour la commande de plusieurs groupes motopompes (46) et/ou soupapes (66, 112).

11. Système de pompe selon la revendication 10, **caractérisé en ce que** l'unité de commande (101) est intégrée dans un groupe motopompe (46) et présente une interface de communication (110) destinée à la communication avec d'autres groupes motopompes (76) pour la commande de ceux-ci.

12. Système de pompe selon l'une des revendications précédentes, **caractérisé en ce qu'**au moins un capteur (94, 96, 98) est un capteur de température, un capteur de pression absolue ou de pression différentielle et/ou un capteur de débit.

13. Système de pompe selon l'une des revendications précédentes, **caractérisé en ce qu'**il fait partie d'un dispositif de chauffage d'eau sanitaire.
